(19) Europäisches Patentamt
European Patent Office
Office européen des brevets

(11) **EP 4 311 585 A1**

(12) **EUROPEAN PATENT APPLICATION**

(43) Date of publication:
**31.01.2024 Bulletin 2024/05**

(21) Application number: **22187903.4**

(22) Date of filing: **29.07.2022**

(51) International Patent Classification (IPC):
**A63F 13/54** (2014.01)

(52) Cooperative Patent Classification (CPC):
**A63F 13/54**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Utopia Music AG**
**6300 Zug (CH)**

(72) Inventor: **Kincy, Trevor**
**6300 Zug (CH)**

(74) Representative: **MERH-IP Matias Erny Reichl
Hoffmann
Patentanwälte PartG mbB
Paul-Heyse-Strasse 29
80336 München (DE)**

(54) **METHOD FOR TRACKING AUDIO CONSUMPTION IN VIRTUAL ENVIRONMENTS**

(57) According to an aspect, there is provided a computer-implemented method of tracking of audio consumption in a virtual environment comprising an avatar representing a user of a computing device and an audio emitter for emitting one or more audio tracks within the virtual environment. The method comprises the following. Initially, a position of the avatar within the virtual environment is monitored. In response to the avatar entering the audible range of the audio emitter, an audio consumption timer is started. In response to the avatar leaving the audible range of the audio emitter, the audio consumption timer is stopped. Then, audio consumption of the user is evaluated based at least on the audio consumption timer and at least one duration of at least one audio track of the one or more audio tracks emitted, at least in part, during running of the audio consumption timer. Information on the audio consumption of the user is outputted.

Fig. 2

**Description**

TECHNICAL FIELD

The embodiments relate to a method, use of the method, an apparatus and a computer program for tracking of audio in virtual environments and specifically quantifying audio consumption of a user in a virtual environment.

BACKGROUND

Music has always had a place in video games and other applications implementing 2D or 3D virtual worlds explorable by the user. Keeping track of audio consumption of the user within the virtual world, especially in the case of licensed audio tracks, is often essential for being able to compensate the rights holders in a fair manner and thus for being able to play licensed audio tracks within the virtual world in the first place. Currently, the estimation of audio consumption is based on the number of copies of a particular virtual world application (containing audio tracks) sold or downloaded which can only provide a very rough estimate of the true audio consumption of a particular user.

BRIEF DESCRIPTION OF THE EMBODIMENTS

According to an aspect, there is provided the subject matter of the independent claims. Embodiments are defined in the dependent claims.
One or more examples of implementations are set forth in more detail in the accompanying drawings and the description below. Other features will be apparent from the description and drawings, and from the claims.

BRIEF DESCRIPTION OF THE DRAWINGS

In the following the embodiments will be described in greater detail by means of preferred embodiments with reference to the attached drawings, in which

Figure 1 illustrates a system to which embodiments may be applied;
Figure 2 shows a schematic view of a virtual environment to which embodiments maybe applied;
Figures 3 to 6 illustrate processes for evaluating audio consumption within a virtual environment according to embodiments;
Figure 7A, 7B and 7C illustrate three different audio consumption scenarios occurring in a virtual environment;
Figures 8 to 9 illustrate processes for evaluating consumption of non-spatialized audio within a virtual environment according to embodiments; and
Figure 10 illustrates an apparatus according to embodiments.

DETAILED DESCRIPTION OF EMBODIMENTS

The invention and its embodiments are not limited to the examples described above but may vary within the scope of the claims.
Music has always had a place in video and computer games and other applications implementing 2D or 3D virtual worlds or environments explorable by the user, called, in the following, virtual world applications. Music in modern virtual world applications may come in many different forms. Traditionally, non-spatialized background music is played, e.g., during menu navigation, or sometimes also during gameplay. More recently, spatialized sound has been implemented in virtual worlds using audio emitters which emit sound (e.g., a particular song) typically only within a limited range inside the virtual world. Audio emitters can be triggered based on certain events occurring within the virtual environment. An audio emitted may be activated, for example, when an avatar of the user enters a pre-defined area or volume around the audio emitter - defined, e.g., as sphere surrounding the audio emitter - and/or when a specifically programmed interaction occurs within the virtual environment, for example when an avatar of the user switches on a jukebox in the virtual environment.
Keeping track of audio consumption of the user within the virtual world, especially in the case of licensed audio tracks, is often essential for being able to compensate the rights holders in a fair manner and thus for being able to play licensed audio tracks within the virtual world in the first place. Currently the only real metric for audio consumption of audio tracks in games and related applications is the number of applications or units sold. For example, if a video game including a particular song of a particular artist sells 30 million copies or is downloaded 30 million times, it may be, for example, assumed that said song of said artist is played at least 30 million times. Obviously, this enables only a very rough estimation of audio consumption. The fact that there exists no dependable and fair solutions for evaluating the audio consumption of licensed audio tracks within virtual world serves to discourage artists and their representatives from allowing the use of their licensed audio tracks in virtual worlds.

To overcome at least some of the aforementioned problems, the embodiments discussed below in detail provide solutions for tracking, measuring, collecting and reporting audio consumption data of users relating to audio tracks played within a virtual environment comprising audio emitter(s). Such a software program may be installed by the developer during the development of the virtual world application. After the virtual world application has been compiled, it may report the collected audio consumption data from the software program which communicates the collected data to a database accessible by various parties such as the associated artists. Said audio consumption data may be used, for example, for calculating royalties and analyzing correlation with other media such as streaming.

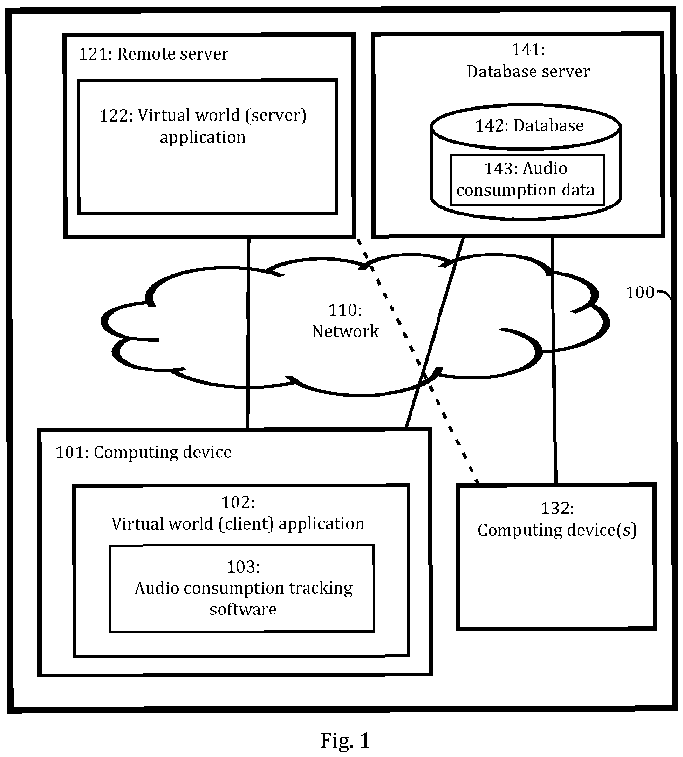

An architecture of a system 100 to which embodiments may be applied is illustrated in Figure 1. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the system 100 may also comprise other functions and structures.

Figure 1 illustrates a system 100 comprising at least a computing device 101, a (remote) database server 141, a remote server 121 and one or more further computing devices 132. The system 100 further comprises a communications network 110 providing communication connections between the computing device 101, the database server 141, the remote server 121 and the one or more further computing devices 132. The term "remote" as used here means remote relative to the computing device 101 (namely, connected to the computing device 101 via the communications network 110).

The computing device 101, also called hereinafter a user device or user equipment, UE or a terminal device, refers to a portable or non-portable computing device, equipment, or apparatus. Computing devices which may be employed include wireless mobile communication devices operating with or without a subscriber identification module SIM in hardware or in software, including, but not limited to, the following types of devices: desktop computer, laptop, touch screen computer, mobile phone, smart phone, personal digital assistant PDA, handset, e-reading device, tablet, game console such as a home console or a handheld console, note-book, multimedia device, sensor, actuator, video camera, car, wearable computer, telemetry appliances, and telemonitoring appliances. In a typical non-limiting embodiment, the computing device 101 may be a desktop computer, a laptop computer, a tablet computer, a smart phone or a game console.

The computing device 101 may further comprise any conventional software/hardware elements of a desktop computer, a laptop computer, a tablet computer or a smart phone for enabling a user to interact with the computing device 101. For example, the computing device 101 may comprise one or more user input devices, a display, a touch screen which may act as both a user input device and a display, and/or one or more audio output devices. The one or more user input devices may comprise, for example, a keyboard, a mouse and/or a game controller. The one or more audio output devices may comprise, for example, a loudspeaker and/or headphones.

Any of the general definitions provided above for the computing device 101 apply, *mutatis mutandis,* also for each of the one or more further computing devices 132. In a typical non-limiting embodiment, each of the one or more further computing devices 132 may be one of a desktop computer, a laptop computer, a tablet computer and a smart phone or any other device with similar functions.

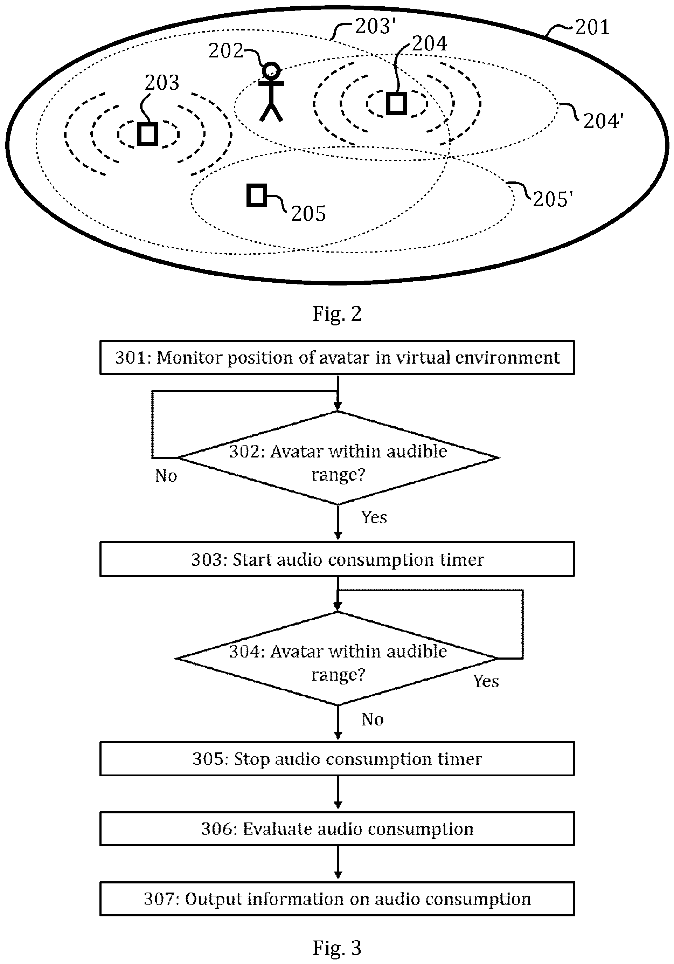

The computing device 101 comprises a virtual world application 102, i.e., the computing device 101 is configured to execute or run the virtual application 102. In the case of an online virtual world, the virtual world application 102 may be specifically a virtual world client application. The virtual world application 102 may be maintained in at least one memory comprised in or connected to the computing device. The virtual world application 102 may be, for example, a game application or other application configured to implement or realize a two-dimensional or three-dimensional virtual world or environment when executed by the computing device 101. The virtual environment may be implemented, for example, using a game engine such as Unreal Engine or Unity. The virtual environment or world implemented by the virtual world application 102 is discussed in further detail in connection with Figure 2.

The virtual world application 102 comprises, as a subprogram, audio consumption tracking software 103. Said audio consumption tracking software 103 is configured to track audio consumption data of users, i.e., measure, collect and report audio consumption data of users relating to audio tracks played to the user within a virtual environment implemented by the virtual world application 102 according to embodiments to be discussed below. The audio consumption data may be specifically reported at least to the database server 141 via the communications network 110. The audio consumption data may be reported via a dedicated application programming interface API provided by the virtual world application 102 or specifically by the audio consumption tracking software 103.

The communications network 110 enabling communication between the computing device 101 and the remote server 121, as well as between the computing device 101 and the database server 141, and between the one or more further computing devices 132 and the database server 141, may comprise one or more wireless networks and/or one or more wired networks. Said one or more wireless networks may be based on any mobile system, such as GSM, GPRS, LTE, 4G, 5G, 6G and beyond, and a wireless local or personal area network, such as Wi-Fi or Bluetooth. The communications network 110 may comprise the Internet. In some embodiments, the communications network 110 may be replaced with a wired or wireless communication link.

The remote server 121 may be specifically a remote server for running an online game, e.g., a Massively Multiplayer Online Game, MMOG, or other online virtual world or environment with multiple users, e.g., a metaverse. Accordingly, the remote server 121 may be configured to run or execute a virtual world application 122 - on server side - while the computing device 101 is running or executing the virtual world application 102 - on client side. In other words, the virtual environment experienced by the user of computing device 101 is realized by the computing device 101 running the virtual world client application 102 in communication with the remote server 121 running the virtual world server application 122.

The user may join the online virtual environment or world by establishing a session. A "session," as used herein, especially in connection with online virtual worlds or environments, may refer to a semi-permanent interactive information exchange between a virtual world client application 102 and a virtual world server application 122. Thus, the establishing of the session may comprise logging into the remote server 121, i.e., a virtual world server, at a certain point in time using the virtual world client application 102. The session may continue for an indefinite period of time and end at a later point in time when the client, i.e., the computing device 101, is disconnected from the remote server 121. The avatar of the user may exist within the virtual environment only when the session of the user is active. Multiple other users may exist, via their avatars, within the virtual world at the same time as the avatar of the user of the computing device 101, each user having his/her own session that may continue irrespective of the sessions of other users.

In some alternative embodiments, a plurality of remote servers 121 running a virtual world server application 122 - either for implementing a single virtual world or environment or multiple virtual worlds or environment - may be provided.

While the audio consumption tracking software 103 is shown in Figure 1 as forming a part of the virtual world software 102, in some alternative embodiments, the audio consumption tracking software 103 may be a separate program running in parallel with the virtual world software 102.

In some embodiments, at least some of the functionalities of the audio consumption tracking software 103 may be implemented by the virtual world server application 122 of the remote server 121, instead of the virtual world client application of the computing device 101.

In some alternative embodiments, the computing device 101 may not necessarily be connected to the remote server 121 during the execution of the virtual world application 103. In such cases, the virtual world or environment may be implemented fully, or at least mostly, locally, i.e., not as a fully online virtual world but as an offline virtual world application or at least predominantly offline virtual world application. For example, the virtual world application 102 may be a predominantly single-player video game or a video game providing a single-player mode which requires no Internet connection or only occasional access to the Internet for, e.g., receiving updates. In some such embodiments, the remote server 121 may even be omitted from the system 100.

While Figure 1 shows only a single computing device 101 capable of running a virtual world application 102 with audio consumption tracking software 103 for simplicity of presentation, in practice, a plurality of such computing devices may be comprised in the system 100. All of said computing devices may be connected to the same database server 141 and optionally also to the same remote server 121.

The system 100 may comprise also one or more further computing device 132. As described above, any of the general definitions provided above for the computing device 101 may apply, *mutatis mutandis,* for the one or more further computing devices 132, unless otherwise explicitly stated below.

Specifically, the one or more further computing devices 132 may correspond to computing devices of parties having an interest in audio consumption data of the user of the virtual world application 102. Said parties of interest or stakeholders, may comprise, for example, the user of the virtual world application, artists whose audio tracks are playable within the virtual environment realized by the virtual world application and representatives of said artists, e.g., agents, record label or company employees, or marketing professionals and rights organization employees. The one or more further computing devices 132 are able to access the database server 141 via the communications network 110.

The remote database server 141 may comprise a database 142 for maintaining or storing at least audio consumption data 143 of user(s) of the virtual world application - e.g., the user of the computing device 101 - reported by the computing device 101 running the virtual world application 102. Said audio consumption data 143 may comprise, for example, information on how many times a given audio track has been consumed by a given user when using the virtual world application 102. The types of audio consumption data maintainable in the database server 141 is discussed in connection with following embodiments in more detail.

The database server 141 may be further configured to provide a user interface UI for users of the one or more further computing devices 132 to remotely view the audio consumption data 143 or a part thereof. The access to the audio consumption data 143 may be provided via a dedicated application programming interface of the database server 141 and via the communications network 110. The users of the one or more further computing devices 132 may be capable of, for example, viewing the audio consumption data and/or downloading the audio consumption data via the user interface. The access to the audio consumption data 143 for a given user may be limited to audio consumption data to which the user has been granted access rights by the database server 141. For example, a record company employee is able to access data relating to audio tracks of artists of said record company and the artist is able to access data relating to their own audio tracks.

In some alternative embodiments, the functionalities described above as being implemented by the database server 141 may be implemented locally by the computing device 101. In other words, the audio consumption data at least for the user of the computing device 101 may be collected to a local database of the computing device 101. The local database may be accessible via the communications network 110 by the one or more computing devices 132.

Figure 2 provides a schematic illustration of virtual environment 201 realized by a virtual world application executed in a computing device, e.g., by the virtual world application 102 of Figure 1 executed in the computing device 101 of Figure 1. The virtual environment may be equally called a virtual world environment, a virtual world or a virtual space. Figure 2 may specifically depict a virtual world session of a particular single user.

The virtual environment 201 comprises an avatar 202 of the user of a computing device. The avatar 202 is a representation of the user of the computing device in the virtual environment. The avatar 202 may be, for example, a human or non-human character depicted as a three-dimensional model or a two-dimensional sprite. The avatar 202 may be associated with a user account of the user in the virtual world application. The avatar 202 is assumed to be controllable by the user using at least one user input device comprised in or connected to the computing device. The user is at least able to control the position of the avatar 202 within the virtual environment 201 and may also be able to interact with the virtual environment using the avatar 202. Depending on the type of the virtual world application, the avatar may or may not be visible to the user during gameplay, e.g., a first or third person view of the avatar may be employed in the virtual world application.

In embodiments where the virtual environment corresponds to a multiplayer game or other multiuser virtual environment, the virtual environment 201 may further comprise one or more avatars of other users.

The virtual environment 201 further comprises one or more audio emitters 203, 204, 205 - i.e., virtual spatialized audio sources - for emitting one or more audio tracks within the virtual environment. Specifically, a non-limiting example with three audio emitters 203, 204, 205 is illustrated in Figure 2. At least some of the audio emitters 203, 204, 205 may be represented in the virtual world with a particular virtual world object - e.g., 3D model of a loudspeaker, a boombox or a radio - visible to the user. Others may have no such visible virtual representation in the virtual environment. The audio emitters 203, 204, 205 may be stationary or moving.

In some embodiments, at least some of the audio emitters 203, 204, 205 may be associated and co-located with an avatar of another user in a multi-user virtual environment.

Similar to a real-life sound source, the audio level — or equally volume level or decibel level — of the emitted audio track as heard by the user depends on the position the avatar 202 relative to the audio emitter 203, 204, 205. Typically, as the avatar 201 moves farther from the audio emitter 203, 204, 204, the audio level decreases. Each of the plurality of audio emitters 203, 204, 205 have an audible range 203', 204', 205' defining an area or a volume of the virtual environment 201 where the emitted audio is audible to the user, i.e., where the audio track is still outputted via an audio output device comprised in or connected to the computing device of the user. Said area or volume may be arranged symmetrically or asymmetrically, in two or three dimensions, around the audio emitter 203, 204, 204. In some cases, the size and/or shape of said area or volume may be affected by one or more virtual world objects, not shown in Figure 2, of the virtual environments. For example, a virtual wall or some other virtual obstruction may block or attenuate sound emitted by an audio emitter 203, 204, 205. Each or at least some of the audio emitters 203, 204, 205 may be emitting sound at different audio levels.

The audio emitters 203, 204, 205 may be triggered or activated based on certain events occurring within the virtual environment. For example, an audio emitter 203, 204, 205 may be activated in response to the avatar 202 being within a pre-defined triggering range of the audio emitter 203, 204, 205. The triggering range may be larger than or equal to the audible range 203', 204', 205'. Alternatively, an audio emitter 203, 204, 205 may be activated in response to a first pre-defined triggering event occurring in the virtual environment. The first pre-defined triggering event may be caused, for example, by the user interacting via their avatar 202 with a virtual world object or a non-player character NPC in the virtual environment or, in the case of a multiplayer game or other multiuser virtual environment, by another user interacting via their avatar 202 with a virtual object in the virtual environment. Analogously, an audio emitter 203, 204, 205 may be deactivated in response to the avatar 202 leaving the triggering range of the audio emitter 203, 204, 204 or in response to a second pre-defined triggering event occurring in the virtual environment.

In some embodiments, the user may be able to directly interact with the audio emitters 203, 204, 205 using their avatar 202 so as to, for example, switch an audio emitter on/off and/or adjust the outputted audio level or audio content, e.g., selecting which audio track is played.

In multi-user online environments, the audio track(s) emitted by an audio emitter 203, 204, 205 may be audible to multiple users having avatars within the audible range of the audio emitter 203, 204, 205 or only to the user which triggered or activated the audio emitter 203, 204, 205 depending on the particular online virtual environment and/or on how the particular audio emitter is configured.

In the specific situation illustrated in Figure 2, the avatar 202 is within the audible ranges 203', 204' of first and second audio emitters 203, 204 while being out of the audible range 205' of a third audio emitter 205. Therefore, the user is receiving simultaneous audio playback of a first audio track originating from the first audio emitter 203 and of a second audio track originating from the second audio emitter 204. As mentioned above, the audio level of a given audio track emitted by an audio emitter experienced at the position of the avatar 202 depends on, e.g., the distance from the avatar 202 to the audio emitter and the initial audio or volume level of the audio emitters. For example, it may occur that the audio level of the first track originating from the first audio emitter 203 is much higher than the audio level of the second track originating from the second audio emitter 204. As a consequence, the second audio track may be audible by the user but not clearly distinguishable by human ear from the other sounds outputted via the audio output device of the computing device. In other words, the user may be unable to fully experience the audio track or may even be unable to make out which audio track is playing. In such cases, it is not obvious when an audio track should be considered as consumed by a user. Some of the embodiments to be discussed below seek to solve this problem by considering the audio track -specific signal-to-noise ratio.

Figure 3 illustrates a process according to an embodiment for evaluating and reporting audio consumption of a user in a virtual environment. The illustrated process may be performed by a computing device such as the computing device 101 of Figure 1. In some alternative embodiments, the illustrated process may be carried out by jointly the computing device 101 of Figure 1 - acting in a client role - and the remote virtual world server 121 of Figure 1. The process of Figure 3 may correspond to a process implementable using the audio consumption tracking software 103 of Figure 1. In the following, the actor of the illustrated process is called a computing device for simplicity.

Referring to Figure 3, it may be initially assumed that a virtual environment has been provided by the computing device. The virtual environment comprises at least an avatar representing a user of a computing device and an audio emitter for emitting one or more audio tracks within the virtual environment. The audio emitter has an audible range defining an area or a volume of the virtual environment. Said one or more audio tracks are outputtable via at least one audio output device comprised in or connected to the computing device when the avatar is within the audible range. The one or more audio tracks maybe stored as, respective, one or more audio track files in a memory of the computing device or in a memory of a remote server, e.g., the remote server 121 of Figure 1, from where they may be accessed by the computing device.

In some embodiments, the virtual environment may be an online virtual environment comprising a plurality of avatars representing a plurality of users. The plurality of users including the user of the computing device carrying out the process of Figure 2 may be connected to the same remote virtual world server via a respective plurality of computing devices.

In general, the virtual environment may be defined as described in connection with Figure 2. Thus, for example, multiple audio emitters may be comprised within the virtual environment in some embodiments.

The computing device monitors, in block 301, a position of the avatar within the virtual environment. The position of the avatar within the virtual environment is assumed to be controllable in one, two or three dimensions by the user using at least one user input device comprised in or connected to the computing device. The position of the avatar may be monitored in block 301 specifically relative to the audible range of the audio emitter.

The computing device checks, in block 302, whether the avatar of the user has entered the audible range of the audio emitter. The check of block 302 may be repeated periodically or regularly when the avatar is outside of the audible range as illustrated in Figure 3 with the arrow going from "No" output of block 302 back to an input of block 302.

In response to the avatar entering the audible range of the audio emitter in block 302, the computing device starts, in block 303, an audio consumption timer. As described above, the avatar entering the audible range in block 302 causes also the one or more audio tracks emitted by the audio emitter to become audible to the user. The audio consumption timer serves to measure or quantify the time that the user has spent consuming the one or more audio tracks emitted by the audio emitter. The computing device may monitor the playing of the one or more audio tracks to the user while the audio consumption timer is running. This monitoring may comprise, e.g., keeping track of which audio track is playing at a given time, how much of the currently playing audio track as already played - e.g., a time value or a percentage value - how much of the currently playing audio track is still left to be played - e.g., a time value or a percentage value - and how many times each audio track has already been played. The results of the monitoring may be stored to a memory of the computing device.

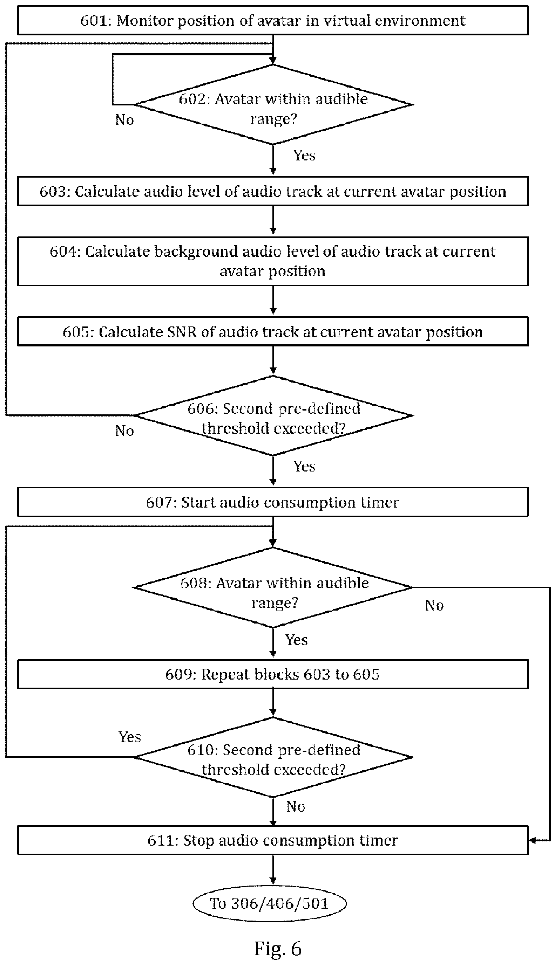

In some embodiments, a further check relating to discernability of the played one or more audio tracks may be performed following a positive result of the check of block 302 before starting the audio consumption timer, as will be described in more detail in connection with Figure 6.

The computing device checks, in block 304, whether the avatar of the user has left the audible range of the audio emitter. The check of block 304 also may be repeated periodically or regularly when the avatar is within the audible range, as illustrated in Figure 3 with the arrow going from "Yes" output of block 304 back to an input of block 304.

In response to the avatar leaving the audible range of the audio emitter in block 304, the computing device stops, in block 305, the audio consumption timer. As described above, the avatar leaving the audible range in block 304 causes also the one or more audio tracks emitted by the audio emitter to become inaudible to the user. The final value of the audio consumption timer may be stored to a memory of the computing device.

The computing device evaluates, in block 306, audio consumption of the user based at least on the audio consumption timer and at least one duration of at least one audio track of the one or more audio tracks emitted, at least in part, during running of the audio consumption timer. The evaluation in block 306 may be further based on information on how much of each of said at least one audio track was played the user, e.g., defined as a time value. For example, the computing device may calculate, in block 306, one or more values of one or more user-specific audio consumption metrics defined for the one or more audio tracks, respectively. Each audio consumption metric may quantify audio consumption of an audio track by the user in the virtual environment. Further examples of audio consumption evaluation functionalities are discussed in connection with the following Figures.

The computing device outputs, in block 307, information on the audio consumption of the user, i.e., at least some of the results of the evaluation carried out in block 306. The outputting in block 307 may be carried out via an application programming interface to a database or to a database server comprising the database. The outputting in block 307 may be carried out also via a communications network. The database may correspond to the database 142 of Figure 1.

In some embodiments, the information on the audio consumption of the user outputted in block 307 may comprise one or more of the following quantities for each or at least one of the one or more audio tracks:

a number of times an audio track was triggered or activated by the user,
a number of times the avatar entered and/or left the audible range of the audio emitter while the audio track was playing,
a number of times the avatar entered and/or left a consumption range of the audio emitter while the audio track was playing, the consumption range being defined as an area or volume within the virtual environment where the signal-to-noise ratio of the audio track is equal to or exceeds the second pre-defined threshold,
a number of times an audio consumption event for the audio track was triggered by the user,
an average length of time the avatar spent within the consumption range of the audio emitter while the audio track was playing,
an average percentage of the audio track consumed in an audio consumption event and
an average length of time that the audio track was consumed in an audio consumption event.

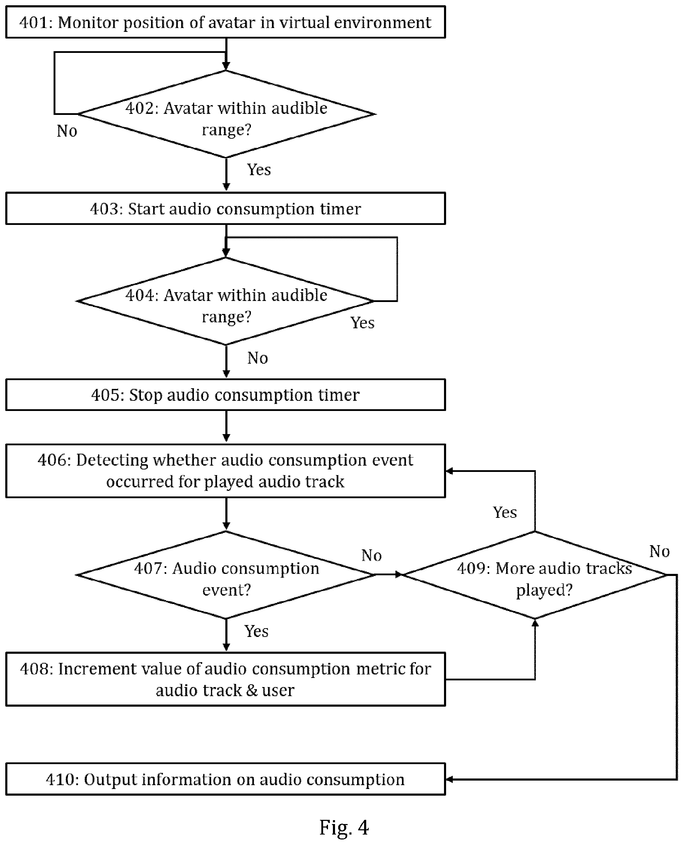

Additionally or alternatively, the information on the audio consumption of the user outputted in block 307 may comprise at least one value of one or more audio consumption metrics defined for the one or more audio tracks so as to quantify audio consumption of the one or more audio tracks by the user, as will be discussed below, e.g., in connection with Figure 4.

Figure 4 illustrates another process according to an embodiment for evaluating and reporting audio consumption of a user. The illustrated process may be performed by a computing device such as the computing device 101 of Figure 1. In some alternative embodiments, the illustrated process may be carried out by jointly the computing device 101 of Figure 1 - acting in a client role - and the remote - virtual world - server 121 of Figure 1. The process of Figure 4 may correspond to a process implementable using the audio consumption tracking software 103 of Figure 1. In the following, the actor of the illustrated process is called a computing device for simplicity.

Figure 4 serves primarily to illustrate with blocks 406 to 409 a more detailed implementation of block 306 according to an embodiment. Actions pertaining to blocks 401 to 405 may correspond fully to actions described in connection with blocks 301 to 305 of Figure 3 above and are thus not repeated here for brevity.

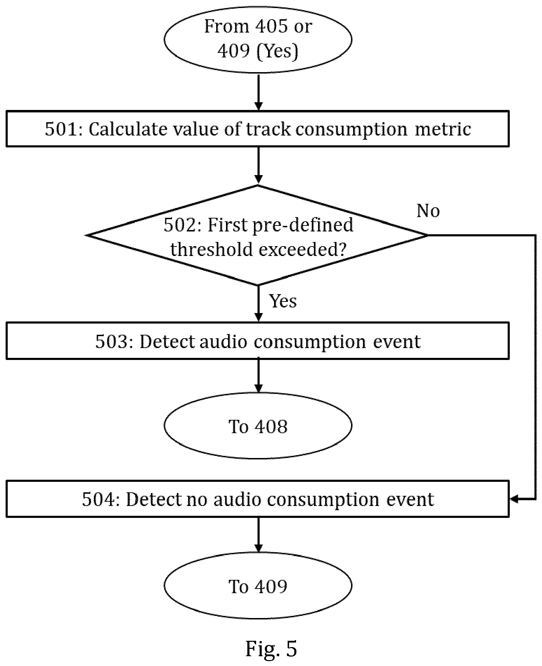

Following the stopping of the audio consumption timer in block 405, the computing device detects, in block 406, whether or not an audio consumption event has occurred based at least on a length of time that an audio track was playing during the running of the audio consumption timer and a duration of said audio track. Here, the audio track may be specifically the first or initial audio track played, at least in part, to the user via the audio emitter after the starting of the audio consumption timer. An occurrence of the audio consumption event indicates that the user has consumed an audio track. An audio consumption event may be considered as occurred or triggered, for example, when a certain relative amount of the audio track has been heard by the user. A more detailed example of how the audio consumption event may be detected is discussed below in connection with Figure 5.

In response to detecting that the audio consumption event has occurred in block 407, the computing device increments, in block 408, a value of an audio consumption metric defined for the audio track and for the user. The audio consumption metric may have a pre-defined initial value such as 0. The incrementing may correspond to increasing the current value of the audio consumption metric by a pre-defined incrementing value such as 1. In general, one or more user-specific audio consumption metrics may be defined for the one or more audio tracks outputtable by the audio emitter, respectively.

After the incrementing in block 408 or in response to detecting, in block 407, that no audio consumption event has occurred, the computing device determines, in block 409, whether other one or ones of the one or more audio tracks outputtable by the audio emitter were played, at least in part, to the user during the running of the audio consumption timer. If at least one other audio track was played, the actions relating to blocks 406 to 408 are repeated for the next audio track which was played to the user, at least in part. As described above, this next audio track has its own audio consumption metric which is incremented if it is determined that an audio consumption event has occurred for said next audio track.

When it is determined that no further audio tracks are left for evaluation in block 409, the process proceeds to block 410. There the computing device outputs information on the audio consumption of the user. The outputting in block 410 may be carried out via an application programming interface to a database or to a database server comprising the database. Here, the information on the audio consumption of the user outputted in block 410 comprises at least at least one value of one or more audio consumption metrics defined for the one or more audio tracks and for the user, and optionally any of the quantities discussed in connection with block 307 of Figure 3. The database may correspond to the database 142 of Figure 1.

Figure 5 illustrates a process according to an embodiment for evaluating whether an audio consumption event has occurred. The illustrated process may be performed by a computing device such as the computing device 101 of Figure 1. In some alternative embodiments, the illustrated process may be carried out by jointly the computing device 101 of Figure 1, acting in a client role, and the remote virtual world server 121 of Figure 1. The process of Figure 5 may correspond to a process implementable using the audio consumption tracking software 103 of Figure 1. In the following, the actor of the illustrated process is called a computing device for simplicity.

Figure 5 serves to illustrate with blocks 501 to 504 a more detailed implementation of blocks 406, 407 according to an embodiment. Thus, the process of Figure 5 may replace blocks 406, 407 of Figure 4 in some embodiments.

Following the stopping of the audio consumption timer according to block 405 of Figure 4, the computing device calculates, in block 501, a value of a track consumption metric. The track consumption metric may be defined as a percentage or a ratio of the length of time that the audio track was playing during the running of the audio consumption timer and the duration of said audio track. Alternatively, the track consumption metric may be defined as the length of time that the audio track was playing during the running of the audio consumption timer.

In some embodiments, the computing device may select dynamically between the two aforementioned alternative definitions of the track consumption metric based on the length of the audio track currently under evaluation. Namely, if the audio track is longer than a pre-defined length - defined in time, e.g., in seconds or minutes and seconds - ,the percentage or ratio definition may be employed. Conversely, if the audio track is shorter than or equal to the pre-defined length, defined in time, e.g., in seconds or minutes and seconds, the length of time definition may be employed. The pre-defined length may have, for example, a value larger than 110 seconds and/or smaller than 130 seconds.

Next, the computing device evaluates, in block 502, whether or not the track consumption metric exceeds a first pre-defined threshold. The first pre-defined threshold provides a limit for how much of the audio track - e.g., how much relative to the duration of the audio track or how many seconds - should be heard by the user in order for the audio track to be considered consumed by the user.

If the track consumption metric is defined as the percentage or a ratio of the length of time that the audio track was playing during the running of the audio consumption timer and the duration of said audio track, the first pre-defined threshold may have a value larger than 0%, preferably larger than 10%, more preferably larger than 20% and/or smaller than 100%, preferably smaller than 50%, more preferably smaller than 40%. In an embodiment, the first pre-defined threshold has a value which is substantially equal to 30%.

If the track consumption metric is defined as the length of time that the audio track was playing during the running of the audio consumption timer, the first pre-defined threshold may have a value larger than 10 seconds, preferably larger than 20 seconds, and/or smaller than 50 seconds, preferably smaller than 40 seconds.

In response to the track consumption metric exceeding a first pre-defined threshold in block 502, the computing device detects, in block 503, the audio consumption event. The process may then proceed to block 408 of Figure 4 and subsequently to block 409 of Figure 4.

Conversely, in response to the track consumption metric failing to exceed the first pre-defined threshold in block 502, the computing device detects, in block 504, that no audio consumption event occurred. The process may then proceed to block 409 of Figure 4.

Figure 6 illustrates another process according to an embodiment for evaluating and reporting audio consumption of a user. The illustrated process may be performed by a computing device such as the computing device 101 of Figure 1. In some alternative embodiments, the illustrated process may be carried out by jointly the computing device 101 of Figure 1 and the remote server 121 of Figure 1. The process of Figure 6 may correspond to a process implementable using the audio consumption tracking software 103 of Figure 1. In the following, the actor of the illustrated process is called a computing device for simplicity.

Referring to Figure 6, actions pertaining to initial blocks 601 to 602 may correspond fully to actions described in connection with blocks 301 to 302 of Figure 3 or blocks 401 to 402 of Figure 4 above and are thus not repeated here for brevity. Here, it may be assumed that the virtual environment provided to the user by the computing device comprises, in addition to the avatar and the audio emitter, one or more further audio emitters for emitting audio within the virtual environment as depicted in Figure 2, and/or other spatialized and/or non-spatialized audio sources producing sound, that may be audible to the user at the same time as the one or more audio tracks emitted by the audio emitter. The non-spatialized audio or background audio produced by said other non-spatialized audio sources may comprise, for example, non-spatialized background sounds, e.g., ambient sound effects relating to the virtual environment such as ambient sounds of a city, and/or non-spatialized background music and/or voice chat audio.

In response to the avatar being detected to be within the audible range of the audio emitter in block 602 - and thus the one or more audio tracks being outputted via the audio output device of the computing device to the user, the process does not proceed directly to the starting of the audio consumption timer as in the previous embodiments. Instead, an additional check for making sure that the one or more audio tracks outputted via the audio output device are actually discernible by the user is carried out before the audio consumption time may be started.

Namely, the computing device calculates, in block 603, an audio level of an audio track currently emitted by the audio emitter at a current position of the avatar within the virtual environment. The current position or location of the avatar may correspond to a position in two or three dimensions. Then, the computing device calculates, in block 604, a background audio level at the current position of the avatar. The background audio level may correspond to the total audio level from which the audio level of the audio track has been subtracted. The background audio level may result from the audio emitted by the one or more further audio emitters in the virtual environment and/or said other audio spatialized and/or non-spatialized sources.

The background audio level $A_{\text{background}}$ at the position of the avatar may be calculated in block 604, in absolute units, as

$$A_{\text{background}} = \sum_{i=1}^{N} A_i$$

or, in decibels, as

$$A_{\text{background}}[\text{dB}] = 10\log\left(\sum_{i=1}^{N} 10^{A_i[\text{dB}]/10}\right),$$

where $A_i$ is an audio level associated with the ith noise audio emitter at the position of the avatar and $N$ is a positive integer indicating the total number of noise audio emitters audible at the position of the avatar, i.e., total number of audio emitters audible at the position of the avatar excluding the audio emitter emitting the audio track of interest. A noise audio emitter is defined here as an audio emitter emitting audio which corresponds to noise mixing with the audio track of interest at the position of the avatar. In some embodiments, audio sources other than audio emitters - e.g., a source of non-spatialized background audio - may be considered when calculating the background audio level, i.e., the terms $A_i$ may comprise also contributions from these audio sources.

If no outer audio emitters - or other audio sources - other than the audio emitter emitting the one or more audio tracks of interest are audible at the position of the avatar, the background audio level may be estimated to be zero in block 604, i.e., minus infinity decibels or, in practice, a very small negative value such as -10 000 dB.

The computing device calculates, in block 605, a signal-to-noise ratio SNR of the audio track at the current position of the avatar based on the audio level of said audio track and the background audio level. The SNR of the audio track $\text{SNR}_{\text{track}}$ - in absolute units - may be calculated as

$$\text{SNR}_{\text{track}} = A_{\text{track}}/A_{\text{background}},$$

where $A_{\text{track}}$ and $A_{\text{background}}$ are audio levels of the audio track and the background in absolute units, respectively. Alternatively, the SNR of the audio track $\text{SNR}_{\text{track}}$ in decibels, dB may be calculated as

$$\mathrm{SNR}_{\mathrm{track}}[\mathrm{dB}] = A_{\mathrm{track}}[\mathrm{dB}] - A_{\mathrm{background}}[\mathrm{dB}].$$

where $A_{\mathrm{track}}$ [dB] and $A_{\mathrm{background}}$ [dB] are audio levels of the audio track and the background in decibels, respectively.

Then, the computing device determines, in block 606, whether or not the calculated SNR exceeds a second pre-defined threshold. The second pre-defined threshold provides a limit for how low the SNR for the audio track can be so that the audio track is still clearly discernable or clearly discernable from the background audio by a human user with normal hearing. The second pre-defined threshold may be defined either in absolute units or decibels.

In some embodiments, the second pre-defined threshold may have a value larger than 10 dB, preferably larger than 20 dB, more preferably larger than 24 dB and/or smaller than 40 dB, preferably smaller than 30 dB, more preferably smaller than 26 dB. For example, the second pre-defined threshold may have substantially a value of 25 dB which corresponds, in most cases, to an SNR level at which the signal is barely hearable by an average human ear with normal hearing.

In some embodiments, the second pre-defined threshold may have a value between 24 dB and 26 dB.

In response to the SNR being equal to or exceeding the second pre-defined threshold in block 606, the computing device starts, in block 607, the audio consumption timer. In response to the SNR being below the second pre-defined threshold in block 606, the computing device does not start the audio consumption timer. Instead, the computing device effectively stops the audio consumption estimation process as no audio track emitted by the audio emitter can be clearly discerned from the background audio by the user based on the calculated SNR. The evaluation described in connection with blocks 602 to 606 may be repeated thereafter periodically or regularly while the user remains within the audible range.

Thus, to summarize, according to the embodiment illustrated in Figure 6, two separate checks need to be passed in order for the audio consumption timer to be started:

- 1) the avatar needs to be within the audible range of the audio emitter in block 602 and

- 2) the SNR for the currently emitted audio track at the position of the avatar needs to be high enough so that it may be assumed that the human user is able to discern the audio track from the background audio in block 606.

The area or volume within the virtual environment where the SNR condition, i.e., the condition 2, is passed may be called a consumption range of the audio emitter. It should be noted that the consumption range of the audio emitter is not static, that is, its size and shape may change dynamically as the audio environment changes, e.g., as audio emitters are activated/deactivated and/or moved and/or non-spatialized audio sources are activated/deactivated.

The computing device checks, in block 608, whether the avatar of the user has left the audible range of the audio emitter, similar to block 304 of Figure 3. Also similar to Figure 3, the computing device stops, in block 611, the audio consumption timer in response to the avatar not being within the audile range in block 608.

In response to the avatar being within the audile range in block 608, the computing device repeats, in block 609, the calculating of the audio level as defined in block 603, the calculating of the background audio level as defined in block 604 and the calculating of the SNR as defined in block 605 for the new current position of the avatar.

In response to the SNR calculated in block 609 being below the second pre-defined threshold in block 610 while the audio consumption timer is running, the computing device stops, in block 611, the audio consumption timer.

Both checks defined in blocks 608 to 610 may be repeated periodically or regularly while the audio consumption timer is running, i.e., when the avatar is within the audible and consumption ranges, as illustrated in Figure 6 with the arrow going from "Yes" output of block 610 back to an input of block 608.

Following the stopping of the audio consumption timer in block 611, the process may proceed in a similar manner as described in connection with any of Figures 3 to 5, that is, the process may proceed to any of blocks 306, 406, 501 of Figure 3, 4 and 5, respectively.

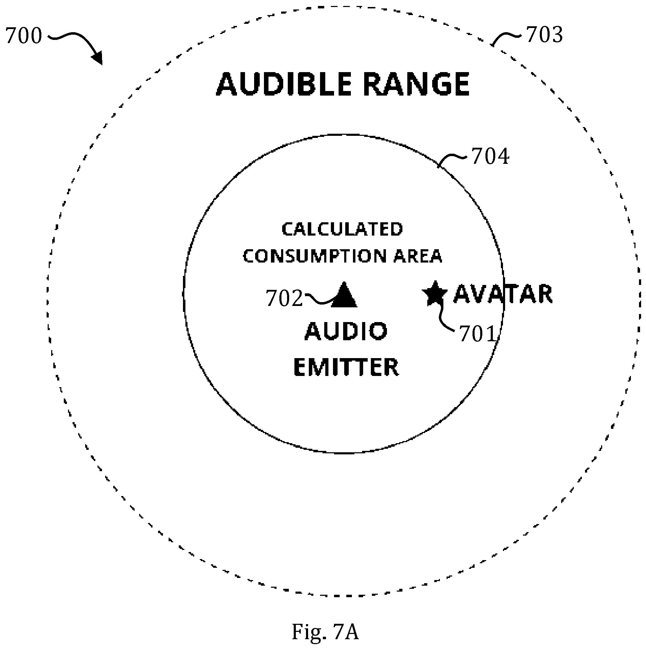

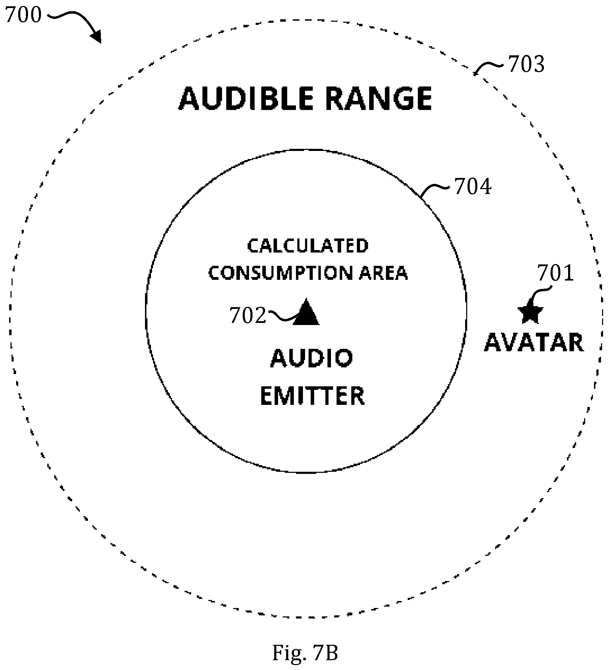

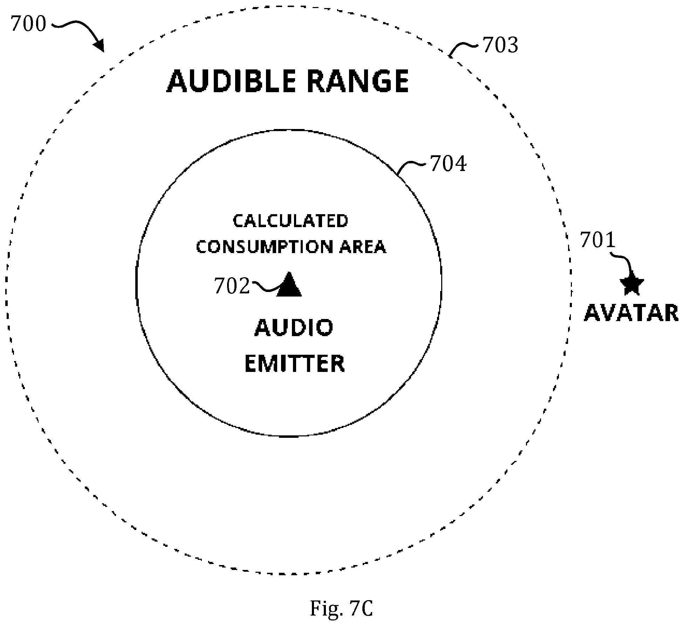

Figures 7A, 7B and 7C illustrate three different audio consumption scenarios occurring in a virtual environment 700. Specifically, said Figures illustrate three scenarios leading to different outcomes of the process of Figure 6.

Each of Figures 7A, 7B and 7C illustrate a virtual environment 700, an avatar 701 of a user, an audio emitter 702 having a certain audible range 703 and a certain consumption range 704. The consumption range is assumed to be the same in all three cases. The consumption range is called the calculated consumption area in Figures 7A, 7B and 7C.

In Figure 7A, the avatar 701 is within both the audible range 703 and the consumption range 704 of the audio emitter 702. In this case, the user is interpreted by the computing device as being currently consuming the one or more audio tracks emitted by the audio emitter. The user is assumed to be able not only to hear the one or more audio tracks but also to discern them from any background audio. In the situation of Figure 7A, the audio consumption timer is running.

In Figure 7B, the avatar 701 is within the audible range 703 of the audio emitter 702 but outside of the consumption range 704 of the audio emitter 702. In this case, the user is interpreted by the computing device as being currently unable to consume the one or more audio tracks emitted by the audio emitter. The one or more audio tracks are outputted by the audio output device of the computing device, but the user is unable to discern them from the background audio which also outputted. The user may be able to hear that something is played over the background audio but the one or more audio tracks are not recognizable to the user, or are barely recognizable to the user and the audio experience is seriously compromised. In the situation of Figure 7B, the audio consumption timer is not running.

In Figure 7C, the avatar 701 is outside both the audible range 703 and the consumption range 704 of the audio emitter 702. Also in this case, the user is interpreted by the computing device as being currently unable to consume the one or more audio tracks emitted by the audio emitter. The one or more audio tracks are not even outputted by the audio output device of the computing device in this case. In the situation of Figure 7C, the audio consumption timer is not running.

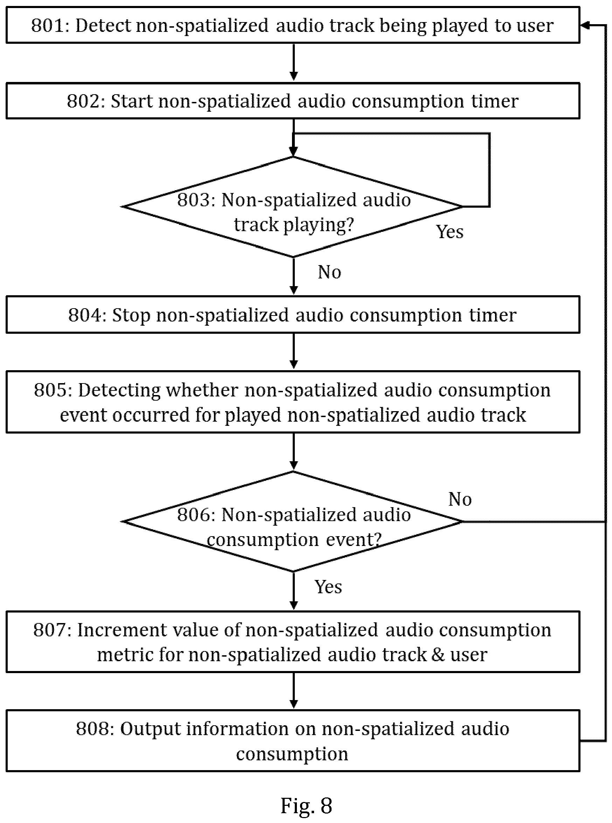

In some embodiments, the computing device for performing audio consumption tracking may be configured to operate using two different operating modes: a first operating mode for evaluating and reporting audio consumption relating to one or more audio tracks emitted by an audio emitter as described above, and a second operating mode for evaluating and reporting audio consumption relating to one or more audio tracks played as non-spatialized audio - e.g., looping audio tracks, in-game "radio", background music and menu music - to the user without the use of any audio emitters. Figure 8 illustrates a process according to an embodiment for evaluating and reporting consumption of non-spatialized audio by a user. The illustrated process may be performed by a computing device such as the computing device 101 of Figure 1. In some alternative embodiments, the illustrated process may be carried out by jointly the computing device 101 of Figure 1 acting in a client role, and the remote virtual world server 121 of Figure 1. The process of Figure 8 may correspond to a process implementable using the audio consumption tracking software 103 of Figure 1. In the following, the actor of the illustrated process is called a computing device for simplicity.

Referring to Figure 8, the computing device initially performs, in block 801, a check for detecting whether or not a non-spatialized audio track is being played to the user of the computing device. The non-spatialized audio track may be played while the user is exploring the virtual environment via their avatar or at least when the computing device is executing a virtual world application for realizing the virtual environment. As described above, the non-spatialized audio track is not emitted by any particular audio emitter. The playing of the non-spatialized audio track and its audio level may be independent of the position of the avatar within the virtual environment.

In response to detecting that the non-spatialized audio track is played to the user in block 801, the computing device starts, in block 802, a non-spatialized audio consumption timer, i.e., an audio consumption timer for non-spatialized audio.

In response to detecting that the non-spatialized audio track is no longer played to the user in block 803, the computing device stops, in block 804, the non-spatialized audio consumption timer.

The computing device detects, in block 805, whether or not a non-spatialized audio consumption event has occurred based at least on a length of time that an audio track was playing during the running of the non-spatialized audio consumption timer and a duration of said non-spatialized audio track. Here, the non-spatialized audio consumption event indicates that the user has consumed the non-spatialized audio track audio track. This action may be carried out in an analogous manner to the detection carried out in block 406.

In response to the detecting that the non-spatialized audio consumption event has occurred in block 806, the computing device increments, in block 807, a value of a non-spatialized audio consumption metric defined for the non-spatialized audio track and for the user. The non-spatialized audio consumption metric may be defined in an analogous manner as described for the audio consumption metric above. Thus, the non-spatialized audio consumption metric may have a pre-defined initial value such as 0. The incrementing may correspond to increasing the current value of the non-spatialized audio consumption metric by a pre-defined incrementing value such as 1. In general, one or more user-specific non-spatialized audio consumption metrics may be defined for one or more non-spatialized audio tracks playable to the user.

Following the incrementing in block 807, the computing device outputs, in block 808, information on non-spatialized audio consumption of the user. The outputting in block 808 may be carried out via an application programming interface to a database, e.g., to a database of a database server. The outputting in block 808 may be carried out also via a communications network. The database may correspond to the database 142 of Figure 1. The information on the non-spatialized audio consumption of the user in block 808 may comprise a value of the non-spatialized audio consumption metric defined for the non-spatialized audio track so as to quantify audio consumption of the non-spatialized audio track by the user.

In some embodiments, the information on the non-spatialized audio consumption of the user outputted in block 808 may comprise one or more of the following quantities:

a number of times the non-spatialized audio track was played to the user,
a number of times a non-spatialized audio consumption event for the non-spatialized audio track was triggered for the user,
an average percentage of the non-spatialized audio track consumed in a non-spatialized audio consumption event and

an average length of time that the non-spatialized audio track was consumed in a non-spatialized audio consumption event.

In some embodiments, all of the quantities listed above may be comprised in the information on the non-spatialized audio consumption of the user outputted in block 808.

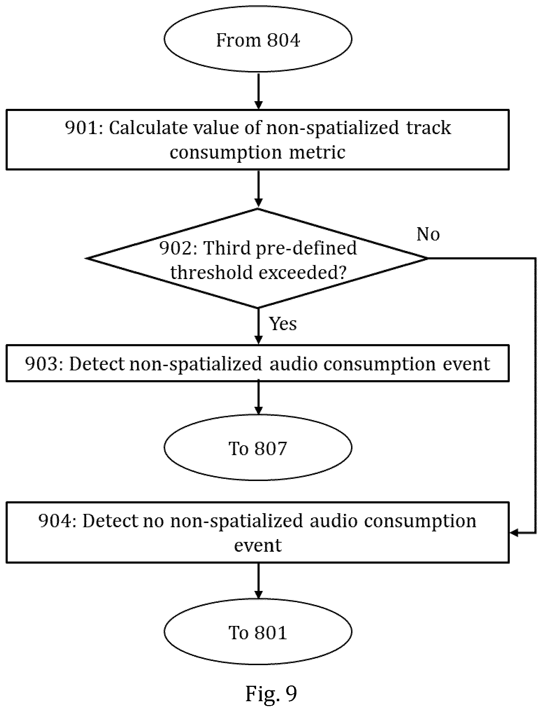

In some embodiments, the detecting in block 805 may be carried in an analogous manner as described in connection with blocks 501 to 503 for the audio track associated with an audio emitter. Any of the definitions provided in connection with Figure 5 may apply, *mutatis mutandis,* in this case. This is shown in Figure 9 which serves to illustrate with blocks 901 to 904 a more detailed implementation of blocks 805, 806 according to an embodiment. Thus, the process of Figure 9 may replace blocks 805, 806 of Figure 8 in some embodiments. The process of Figure 9 may correspond to a process implementable using the audio consumption tracking software 103 of Figure 1.

Following the stopping of the audio consumption timer according to block 804 of Figure 8, the computing device calculates, in block 805, a value of a non-spatialized track consumption metric defined as the length of time that the non-spatialized audio track was playing during the running of the non-spatialized audio consumption timer or as a percentage or a ratio of the length of time that the non-spatialized audio track was playing during the running of the non-spatialized audio consumption timer and the duration of said non-spatialized audio track. The non-spatialized track consumption metric may, thus, be defined in a similar manner to the track consumption metric discussed in connection with Figure 5.

In response to the value of the non-spatialized track consumption metric exceeding a third pre-defined threshold (value of which may or may not match the value of the first pre-defined threshold) in block 902, the computing device detects, in block 903, the non-spatialized audio consumption event. In response to the value of the non-spatialized track consumption metric failing to exceed the third pre-defined threshold in block 902, the computing device detects, in block 904, that no non-spatialized audio consumption event occurred.

The blocks, related functions, and information exchanges described above by means of Figures 3 to 6, 8 and 9 are in no absolute chronological order, and some of them may be performed simultaneously or in an order differing from the given one. Other functions can also be executed between them or within them, and other information may be sent and/or received, and/or other map-ping rules applied. Some of the blocks or part of the blocks or one or more pieces of information can also be left out or replaced by a corresponding block or part of the block or one or more pieces of information.

An embodiment involves use of any of the computer-implemented methods described above for tracking of audio consumption in an online virtual environment comprising a plurality of avatars representing a plurality of users. The online virtual environment may be or correspond to a metaverse.

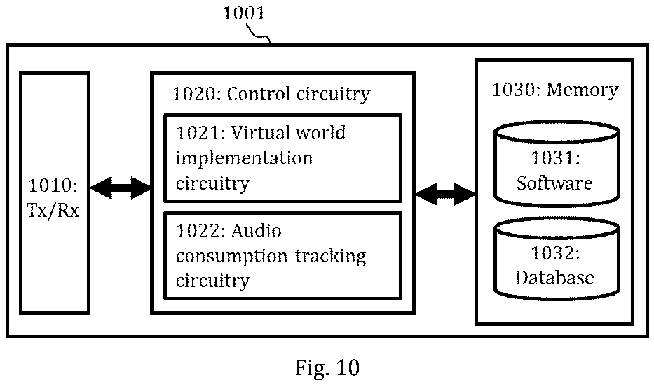

Figure 10 illustrates an apparatus 1001 configured to carry out the functions or some of the functions described above in connection with the computing device 101 of Figure 1. The apparatus 1001 may be an electronic device comprising electronic circuitries. The apparatus 1001 may be a separate entity or a plurality of separate entities, i.e., a distributed device. The apparatus 1001 may be connected to a communications network, similar to as depicted in Figure 1.

The apparatus 1001 may comprise a control circuitry 1020 such as at least one processor, and at least one memory 1030 including a computer program code or software 1031 wherein the at least one memory and the computer program code or software are configured, with the at least one processor, to cause the apparatus 1001 to carry out any one of the embodiments described above. The software may comprise the virtual world application 102 and the audio consumption tracking software 103 as discussed in connection with Figure 1.

The memory 1030 may be implemented using any suitable data storage technology, such as semiconductor-based memory devices, flash memory, magnetic memory devices and systems, optical memory devices and systems, fixed memory and removable memory. The memory may comprise a database 1032. The memory 1030 may be connected to the control circuitry 1020 via an interface.

The apparatus 1001 may further comprise one or more interfaces 1010 comprising hardware and/or software for realizing communication connectivity according to one or more communication protocols. Specifically, the one or more interfaces 1010 may comprise, for example, interfaces providing a connection to a remote server, i.e., a virtual world server, via a communications network and/or to a database server for storing audio consumption data. The one or more interfaces 1010 may enable receiving user inputs via one or more user input devices, e.g., a keyboard and a mouse. The one or more interfaces 1010 may comprise standard well-known components such as an amplifier, filter, frequency-converter, (de)modulator, and encoder/decoder circuitries and one or more antennas. The one or more interfaces 1010 may comprise an application programming interface for enabling reporting of spatialized and/or non-spatialized audio consumption information to the database server.

The control circuitry 1020 may comprise virtual world implementation circuitry 1021. The virtual world implementation circuitry 1021 may be configured to provide a virtual environment or virtual world according to embodiments. The control circuitry 1020 may further comprise audio consumption tracking circuitry 1022. The audio consumption tracking circuitry 1020 may be configured to carry out any of the processes discussed in connection with Figures 1 to 6, 7A, 7B, 7C, 8 and 9 and not carried out by the virtual world implementation circuitry 1021. In some embodiments, the virtual world implementation circuitry 1021 and the audio consumption tracking circuitry 1022 may be, fully or partly, the same circuitry.

As used in this application, the term "circuitry" may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software, e.g. firmware, for operation, but the software may not be present when it is not needed for operation. This definition of "circuitry" applies to all uses of this term in this application, including any claims. As a further example, as used in this application, the term 'circuitry' also covers an implementation of merely a hardware circuit or processor or multiple processors or a portion of a hardware circuit or processor and its - or their - accompanying software and/or firmware. The term "circuitry" also covers, for example and if applicable to the particular claim element, a baseband integrated circuit for an access node or a terminal device or other computing or network device.

In an embodiment, at least some of the processes described in connection with Figures 3 to 6, 8 and 9 may be carried out by an apparatus - e.g., computing device or a computing system - comprising corresponding means for carrying out at least some of the described processes. Some example means for carrying out the processes may include at least one of the following: detector, processor including dual-core and multiple-core processors, digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 3 to 6, 8 and 9 or operations thereof.

Embodiments as described may also be carried out in the form of a computer process defined by a computer program or portions thereof. Embodiments of the methods described in connection with Figures 3 to 6, 8 and 9 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the embodiments has been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a per-son skilled in the art that the described embodiments may, but are not required to, be combined with other embodiments in various ways.

**Claims**

1. A computer-implemented method of tracking of audio consumption in a virtual environment comprising an avatar representing a user of a computing device and an audio emitter for emitting one or more audio tracks within the virtual environment, the computer-implemented method comprising:

monitoring a position of the avatar within the virtual environment, wherein the position of the avatar within the virtual environment is controllable by the user using at least one user input device comprised in or connected to the computing device and the audio emitter has an audible range defining an area or a volume of the virtual environment, the one or more audio tracks being outputtable via at least one audio output device comprised in or connected to the computing device when the avatar is within the audible range;
in response to the avatar entering the audible range of the audio emitter, starting an audio consumption timer;
in response to the avatar leaving the audible range of the audio emitter, stopping the audio consumption timer;

evaluating audio consumption of the user based at least on the audio consumption timer and at least one duration of at least one audio track of the one or more audio tracks emitted, at least in part, during running of the audio consumption timer; and

outputting information on the audio consumption of the user.

2. The computer-implemented method of claim 1, further comprising:

activating the audio emitter in response to the avatar being within a triggering range of the audio emitter or in response to a first pre-defined triggering event occurring in the virtual environment, wherein the triggering range is larger than or equal to the audible range; and/or

deactivating the audio emitter in response to the avatar leaving the triggering range of the audio emitter or in response to a second pre-defined triggering event occurring in the virtual environment.

3. The computer-implemented method of claim 1 or 2, wherein the evaluating of the audio consumption of the user comprises, for each of said at least one audio track of the one or more audio tracks:

detecting if an audio consumption event has occurred based at least on a length of time that an audio track was playing during the running of the audio consumption timer and a duration of said audio track, wherein an occurrence of the audio consumption event indicates that the user has consumed an audio track; and

in response to the detecting that the audio consumption event has occurred, incrementing a value of an audio consumption metric defined for the audio track and for the user, wherein the information on the audio consumption of the user comprises at least one or more audio consumption metrics defined for the one or more audio tracks and for the user.

4. The computer-implemented method of claim 3, wherein the step of detecting if the audio consumption event has occurred comprises at least:

calculating a value of a track consumption metric defined as the length of time that the audio track was playing during the running of the audio consumption timer or as a percentage or a ratio of the length of time that the audio track was playing during the running of the audio consumption timer and the duration of said audio track; and

in response to the value of the track consumption metric exceeding a first pre-defined threshold, detecting the audio consumption event; and

in response to the value of the track consumption metric failing to exceed the first pre-defined threshold, detecting that no audio consumption event occurred.

5. The computer-implemented method of claim 4, further comprising:
in response to the avatar entering the audible range of the audio emitter, performing the following:

calculating an audio level of an audio track currently emitted by the audio emitter at a current position of the avatar;

calculating a background audio level at the current position of the avatar;

calculating a signal-to-noise ratio of the audio track at the current position of the avatar based on the audio level of said audio track and the background audio level;

performing the starting of the audio consumption timer only in response to the signal-to-noise ratio being equal to or exceeding a second pre-defined threshold.

6. The computer-implemented method of claim 5, further comprising:

repeating the calculating of the audio level, the calculating of the background audio level and the calculating of the signal-to-noise ratio periodically or regularly while the audio consumption timer is running; and

in response to the signal-to-noise ratio being below the second pre-defined threshold while the audio consumption timer is running, stopping the audio consumption timer.

7. The computer-implemented method according to any claims 5 to 6, wherein the second pre-defined threshold has a value between 24 dB and 26 dB.

8. The computer-implemented method according to any of claims 5 to 7, wherein the information on the audio consumption of the user comprises one or more of the following quantities for each or at least one of the one or more audio tracks:

a number of times an audio track was triggered or activated by the user,

a number of times the avatar entered and/or left the audible range of the audio emitter while the audio track was playing,

a number of times the avatar entered and/or left a consumption range of the audio emitter while the audio track was playing, the consumption range being defined as an area or volume within the virtual environment where the signal-to-noise ratio of the audio track is equal to or exceeds the second pre-defined threshold,

a number of times an audio consumption event for the audio track was triggered by the user,

an average length of time the avatar spent within the consumption range of the audio emitter while the audio track was playing,

an average percentage of the audio track consumed in an audio consumption event and

an average length of time that the audio track was consumed in an audio consumption event.

9. The computer-implemented method according to any of preceding claim, further comprising

in response to detecting that a non-spatialized audio track is played to the user, starting a non-spatialized audio consumption timer;

in response to detecting that the non-spatialized audio track is no longer played to the user, stopping the non-spatialized audio consumption timer;

detecting whether or not a non-spatialized audio consumption event has occurred based at least on a length of time that an audio track was playing during the running of the non-spatialized audio consumption timer and a duration of said non-spatialized audio track, wherein the non-spatialized audio consumption event indicates that the user has consumed the non-spatialized audio track audio track;

in response to the detecting that the non-spatialized audio consumption event has occurred, incrementing a value of a non-spatialized audio consumption metric defined for the non-spatialized audio track and for the user; and

outputting information on non-spatialized audio consumption of the user.

10. The computer-implemented method of claim 9, wherein the detecting if the non-spatialized audio consumption event has occurred comprises at least:

calculating a value of a non-spatialized track consumption metric defined as the length of time that the non-spatialized audio track was playing during the running of the non-spatialized audio consumption timer or as a percentage or a ratio of the length of time that the non-spatialized audio track was playing during the running of the non-spatialized audio consumption timer and the duration of said non-spatialized audio track;

in response to the value of the non-spatialized track consumption metric exceeding a third pre-defined threshold, detecting the non-spatialized audio consumption event; and

in response to the value of the non-spatialized track consumption metric failing to exceed the third pre-defined threshold, detecting that no non-spatialized audio consumption event occurred.

11. The computer-implemented method according to any preceding claim, further comprising:
providing, by the computing device or by the computing device in communication with at least one remote server, the virtual environment.

12. The computer-implemented method according to any preceding claim, wherein the virtual environment is a two-dimensional or three-dimensional virtual environment implemented using a game engine.

13. A computing device comprising means for performing the computer-implemented method according to any preceding claim.

14. A non-transitory computer readable media having stored thereon instructions that, when executed by a computing device, cause the computing device to perform the computer-implemented method according to any of claims 1 to 12.

15. Use of the computer-implemented method according to any of claims 1 to 13 for tracking of audio consumption in an online virtual environment comprising a plurality of avatars representing a plurality of users.

**121: Remote server**

**122: Virtual world (server) application**

**141: Database server**

**142: Database**

**143: Audio consumption data**

**110: Network**

100

**101: Computing device**

**102: Virtual world (client) application**

**103: Audio consumption tracking software**

**132: Computing device(s)**

Fig. 1

Fig. 2

301: Monitor position of avatar in virtual environment

302: Avatar within audible range?

No

Yes

303: Start audio consumption timer

304: Avatar within audible range?

Yes

No

305: Stop audio consumption timer

306: Evaluate audio consumption

307: Output information on audio consumption

Fig. 3

401: Monitor position of avatar in virtual environment

402: Avatar within audible range?

No

Yes

403: Start audio consumption timer

404: Avatar within audible range?

Yes

No

405: Stop audio consumption timer

406: Detecting whether audio consumption event occurred for played audio track

Yes

407: Audio consumption event?

No

409: More audio tracks played?

No

Yes

408: Increment value of audio consumption metric for audio track & user

410: Output information on audio consumption

Fig. 4

From 405 or
409 (Yes)

↓

501: Calculate value of track consumption metric

↓

502: First pre-defined
threshold exceeded?

No →

Yes ↓

503: Detect audio consumption event

↓

To 408

504: Detect no audio consumption event

↓

To 409

Fig. 5

Fig. 6

Fig. 7A

Fig. 7B

700

703

**AUDIBLE RANGE**

704

**CALCULATED**
**CONSUMPTION AREA**

702 ▲

**AUDIO**
**EMITTER**

701

★

**AVATAR**

Fig. 7C

801: Detect non-spatialized audio track being played to user

802: Start non-spatialized audio consumption timer

803: Non-spatialized audio track playing?

Yes

No

804: Stop non-spatialized audio consumption timer

805: Detecting whether non-spatialized audio consumption event occurred for played non-spatialized audio track

806: Non-spatialized audio consumption event?

No

Yes

807: Increment value of non-spatialized audio consumption metric for non-spatialized audio track & user

808: Output information on non-spatialized audio consumption

Fig. 8

From 804

901: Calculate value of non-spatialized track consumption metric

902: Third pre-defined threshold exceeded?

No

Yes

903: Detect non-spatialized audio consumption event

To 807

904: Detect no non-spatialized audio consumption event

To 801

Fig. 9

1001

Fig. 10

Europäisches
Patentamt

European
Patent Office

Office européen
des brevets

## EUROPEAN SEARCH REPORT

Application Number

EP 22 18 7903

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 415 392 A (SONY COMP ENTERTAINMENT EUROPE [GB]) 28 December 2005 (2005-12-28) | 1-15 | INV. A63F13/54 |
| Y | * page 1, line 4 - page 3, line 11 * * page 16, line 33 - page 18, line 17 * ----- | 1-15 | |
| Y | US 2016/100018 A1 (MACKENZIE RODERICK [US] ET AL) 7 April 2016 (2016-04-07) * paragraph [0018] - paragraph [0019] * * paragraph [0011] * * paragraph [0073] * ----- | 1-15 | |
| Y | CHARLENE ELLIOTT ET AL: "Design notations for creating virtual environments", 20091012; 1077952576 - 1077952576, 12 October 2009 (2009-10-12), pages 7-15, XP058324254, DOI: 10.1145/1632149.1632152 ISBN: 978-1-60558-643-4 | 2 | |
| A | * "Programming" & "Rules for the placement of icons and annotations"; page 11 - page 12 * ----- | 1,3-15 | |
| A | US 2022/014870 A1 (MANGIAT STEPHEN VINCENT [US] ET AL) 13 January 2022 (2022-01-13) * paragraph [0110] * * paragraph [0121] - paragraph [0122] * * paragraph [0025] - paragraph [0028] * ----- | 1-15 | TECHNICAL FIELDS SEARCHED (IPC) A63F |

The present search report has been drawn up for all claims

| Place of search | Date of completion of the search | Examiner |
|---|---|---|
| Munich | 20 January 2023 | Garton, Paul |

EPO FORM 1503 03.82 (P04C01)

## ANNEX TO THE EUROPEAN SEARCH REPORT
## ON EUROPEAN PATENT APPLICATION NO.

EP 22 18 7903

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2023

| Patent document cited in search report | | Publication date | Patent family member(s) | | Publication date |
|---|---|---|---|---|---|
| GB 2415392 | A | 28-12-2005 | GB | 2415392 A | 28-12-2005 |
| | | | GB | 2446529 A | 13-08-2008 |
| | | | WO | 2006000786 A1 | 05-01-2006 |
| US 2016100018 | A1 | 07-04-2016 | US | 2016100018 A1 | 07-04-2016 |
| | | | WO | 2016054360 A1 | 07-04-2016 |
| US 2022014870 | A1 | 13-01-2022 | AU | 2016324039 A1 | 19-04-2018 |
| | | | AU | 2021290360 A1 | 03-02-2022 |
| | | | CA | 2997789 A1 | 23-03-2017 |
| | | | CA | 3169076 A1 | 23-03-2017 |
| | | | CN | 108351700 A | 31-07-2018 |
| | | | CN | 115525148 A | 27-12-2022 |
| | | | EP | 3353589 A1 | 01-08-2018 |
| | | | IL | 257855 A | 30-04-2018 |
| | | | JP | 6887422 B2 | 16-06-2021 |
| | | | JP | 7162099 B2 | 27-10-2022 |
| | | | JP | 2018529167 A | 04-10-2018 |
| | | | JP | 2021121955 A | 26-08-2021 |
| | | | JP | 2022177024 A | 30-11-2022 |
| | | | KR | 20180050746 A | 15-05-2018 |
| | | | KR | 20220007176 A | 18-01-2022 |
| | | | NZ | 741095 A | 28-05-2021 |
| | | | NZ | 776082 A | 01-07-2022 |
| | | | US | 2017078825 A1 | 16-03-2017 |
| | | | US | 2020260213 A1 | 13-08-2020 |
| | | | US | 2022014870 A1 | 13-01-2022 |
| | | | US | 2022394419 A1 | 08-12-2022 |
| | | | WO | 2017048713 A1 | 23-03-2017 |

EPO FORM P0459

For more details about this annex : see Official Journal of the European Patent Office, No. 12/82